# EUROPÄISCHE PATENTSCHRIFT

(11) **EP 1 888 914 B1**
(45) Veröffentlichungstag und Bekanntmachung des Hinweises auf die Patenterteilung: **11.07.2012**
(21) Anmeldenummer: 06725319.5
(22) Anmeldetag: 27.03.2006
(51) Int. Cl.: F02P 23/04, H01S 3/09, H01S 3/113

(54) **ZÜNDEINRICHTUNG FÜR EINE BRENNKRAFTMASCHINE**
IGNITION DEVICE FOR AN INTERNAL COMBUSTION ENGINE
DISPOSITIF D'ALLUMAGE POUR MOTEUR A COMBUSTION INTERNE

(30) Priorität: 27.05.2005 DE 102005024482
(43) Veröffentlichungstag der Anmeldung: 20.02.2008
(73) Patentinhaber: ROBERT BOSCH GMBH, 70442 Stuttgart (DE)
(72) Erfinder: VOGEL, Manfred, 71254 Ditzingen (DE); HERDEN, Werner, 70839 Gerlingen (DE); RIDDERBUSCH, Heiko, 70567 Stuttgart-Moehringen (DE); OZYGUS, Bernd, 10717 Berlin (DE)
(86) Internationale Anmeldenummer: PCT/EP2006/061049
(87) Internationale Veröffentlichungsnummer: WO 2006/125685

(56) Entgegenhaltungen:
- EP-A- 1 519 039
- WO-A-02/081904
- WO-A-2005/066488
- US-B1- 6 382 957
- US-B1- 6 413 077
- US-B1- 6 676 402

## Beschreibung

### Stand der Technik

Die Erfindung betrifft eine Zündeinrichtung für eine Brennkraftmaschine nach dem Oberbegriff des Anspruchs 1.

Aus der WO 02/081904 oder US 6382957 ist bereits eine gattungsgemäße Zündeinrichtung bekannt, bei der an einem Zylinder einer Brennkraftmaschine eine Laser-Zündeinrichtung angeordnet ist. Die eigentliche Lasereinrichtung ist über eine durch eine Glasfaser gebildete Lichtleitereinrichtung mit einer Pumplichtquelle verbunden, welche die Lasereinrichtung optisch pumpt.

Aufgabe der vorliegenden Erfindung ist es, eine Zündeinrichtung der eingangs genannten Art so weiter zu bilden, dass sie möglichst preiswert in Großserie eingesetzt werden kann.

Diese Aufgabe wird durch eine Zündeinrichtung mit den Merkmalen des Anspruchs 1 gelöst. Vorteilhafte Weiterbildungen sind in Unteransprüchen angegeben.

### Vorteile der Erfindung

Das erfindungsgemäß vorgesehene monolithische Teil kann den in einem Kraftfahrzeug bei einer Brennkraftmaschine auftretenden äußeren Bedingungen, beispielsweise Beschleunigungen, tiefen und hohen Temperaturen sowie hohen Temperaturgradienten, besonders gut stand halten, ohne das komplexe und aufwendige konstruktive Maßnahmen beispielsweise zur Befestigung des Einkoppelspiegels und des Auskoppelspiegels erforderlich sind. Bereits hierdurch werden die Herstellkosten erhebliche gesenkt.

Darüber hinaus wird auch die Zuverlässigkeit im Betrieb einer solchen Zündeinrichtung erhöht, da die einzelnen Elemente ihre für den Betrieb der Zündeinrichtung wichtige Lage zueinander trotz der äußeren Belastungen nicht verändern können. Außerdem werden die Montagekosten und -zeiten reduziert, da weniger separate Teile gehandhabt werden müssen.

Ferner kann ein solches monolithisches Teil automatisiert hergestellt werden, was die Herstellkosten ebenfalls senkt. Dies gilt insbesondere dann, wenn die verschiedenen Spiegel einfach durch eine entsprechende Beschichtung einer Endfläche des laseraktiven Festkörpers hergestellt werden und wenn das monolithische Teil aus einem Wafer hergestellt ist.

Zusätzliche Kosteneinsparungen können erzielt werden, wenn der Resonator der Lasereinrichtung nicht nur durch den laseraktiven Festkörper, sondern zusätzlich durch einen Glaskörper gebildet wird. In diesem Fall kann der relativ teure laseraktive Festkörper deutlich kleiner sein. Dabei sind unterschiedlichste Anordnungen des Glaskörpers relativ zum laseraktiven Festkörper der Lasereinrichtung und relativ zum Q-Switch möglich, abhängig von den individuellen Einbauerfordernissen. Radial um den laseraktiven Festkörper herum kann eine Reflektionseinrichtung, beispielsweise in Form eines Glaskörpers, angeordnet sein, um auf diese Weise von der Lichtleitereinrichtung am Einkoppelspiegel vorbei gestrahltes Pumplicht transversal in den laseraktiven Festkörper einzukoppeln. Hierdurch kann eine sehr kurz bauende, ohne besondere Einkoppeloptik auskommende, und dennoch mit hohem Wirkungsgrad arbeitende Zündeinrichtung realisiert werden.

Eine Steigerung des Wirkungsgrads ist auch durch die Verwendung eines optischen Verstärkers möglich, der von einer eigenen Pumplichtquelle oder von der Pumplichtquelle der Lasereinrichtung gespeist werden kann. Die erste Variante gestattet die Realisierung höherer Leistungen, die letztgenannte Variante ist konstruktiv besonders einfach. Dies gilt insbesondere dann, wenn der optische Verstärker und die Lasereinrichtung monolithisch sind. Auch hier kann eine monolithische Einheit aus Lasereinrichtung, Glaskörper, Reflektionseinrichtung und optischem Verstärker gebildet werden, wobei die Reflektionseinrichtung mindestens eine Reflektionsfläche bereit stellen kann, durch die das Pumplicht nicht nur zum laseraktiven Körper der Lasereinrichtung, sondern auch zum Verstärker hin reflektiert wird. Auf diese Weise sind sehr kompakte, stabile, und in Großserie maschinell herstellbare Einheiten realisierbar. Möglich ist aber auch, dass das von einer einzigen Pumplichtquelle bereit gestellte Pumplicht durch eine bifokale Linse einerseits auf die Lasereinrichtung und andererseits auf den optischen Verstärker aufgeteilt wird.

Eine Kostenreduzierung kann ferner auch durch die monolithische Ausgestaltung jener optischen Einrichtung erzielt werden, durch die der Laserstrahl in den Brennraum eingekoppelt und dort auf eine bestimmte Stelle fokussiert wird.

### Zeichnungen

Nachfolgend werden besonders bevorzugte Ausführungsbeispiele der vorliegenden Erfindung unter Bezugnahme auf die beiliegende Zeichnung näher erläutert.

In der Zeichnung zeigen:
- Figur 1: eine schematische Darstellung einer Brennkraftmaschine mit einer Zündeinrichtung;
- Figur 2: eine schematische Darstellung der Zündeinrichtung von Figur 1;
- Figur 3: eine vergrößerte Darstellung eines Bereichs von Figur 2;
- Figuren 4 bis 21: verschiedene Ausführungsbeispiele der Zündein-richtung von Figur 2; und
- Figur 22: eine Darstellung von vorne einer Sammellinse des Ausführungsbeispiels von Figur 21.

### Beschreibung der Ausführungsbeispiele

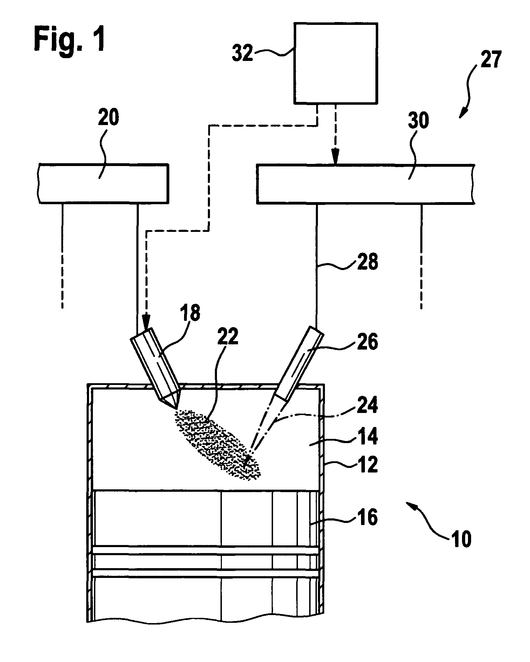

Eine Brennkraftmaschine trägt in Figur 1 insgesamt das Bezugszeichen 10. Sie dient zum Antrieb eines nicht dargestellten Kraftfahrzeugs. Die Brennkraftmaschine 10 umfasst mehrere Zylinder, von denen in Figur 1 nur einer mit dem Bezugszeichen 12 gezeichnet ist. Ein Brennraum 14 des Zylinders 12 wird von einem Kolben 16 begrenzt. Kraftstoff gelangt in den Brennraum 14 direkt durch einen Injektor 18, der an einen Kraftstoff-Druckspeicher ("rail") 20 angeschlossen ist.

In den Brennraum 14 eingespritzter Kraftstoff 22 wird mittels eines Laserimpulses 24 entzündet, der von einer eine Lasereinrichtung 26 umfassenden Zündeinrichtung 27 in den Brennraum 14 abgestrahlt wird. Hierzu wird die Lasereinrichtung 26 über eine Lichtleitereinrichtung 28 mit einem Pumplicht gespeist, welches von einer Pumplichtquelle 30 bereit gestellt wird. Die Pumplichtquelle 30 wird von einer Steuer- und Regeleinrichtung 32 gesteuert, die auch den Injektor 18 ansteuert.

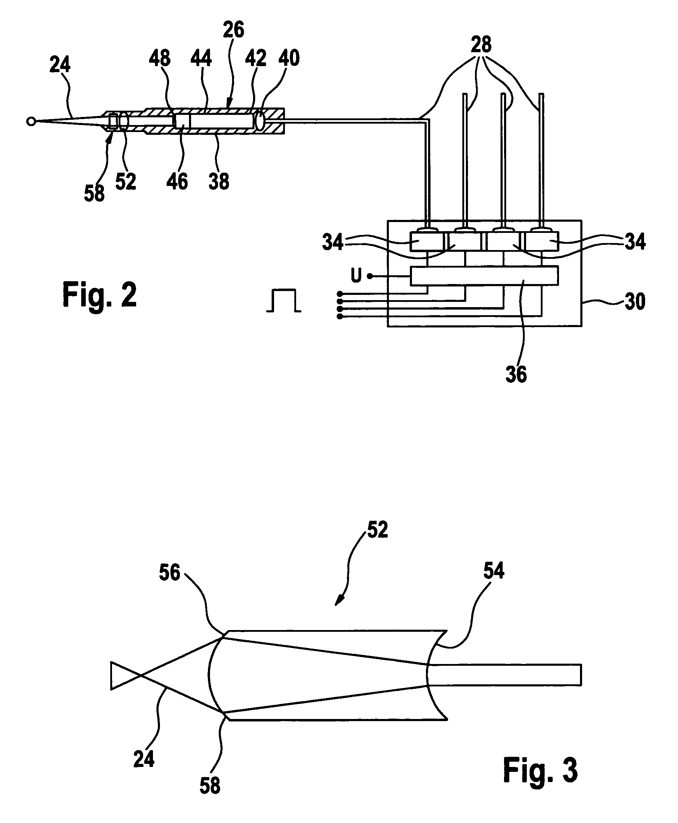

Wie aus Figur 2 hervorgeht, speist die Pumplichtquelle 30 mehrere Lichtleitereinrichtungen 28 für verschiedene Lasereinrichtungen 26. Hierzu verfügt sie über mehrere Einzel-Lichtquellen 34, die mit einer Pulsstromversorgung 36 verbunden sind.

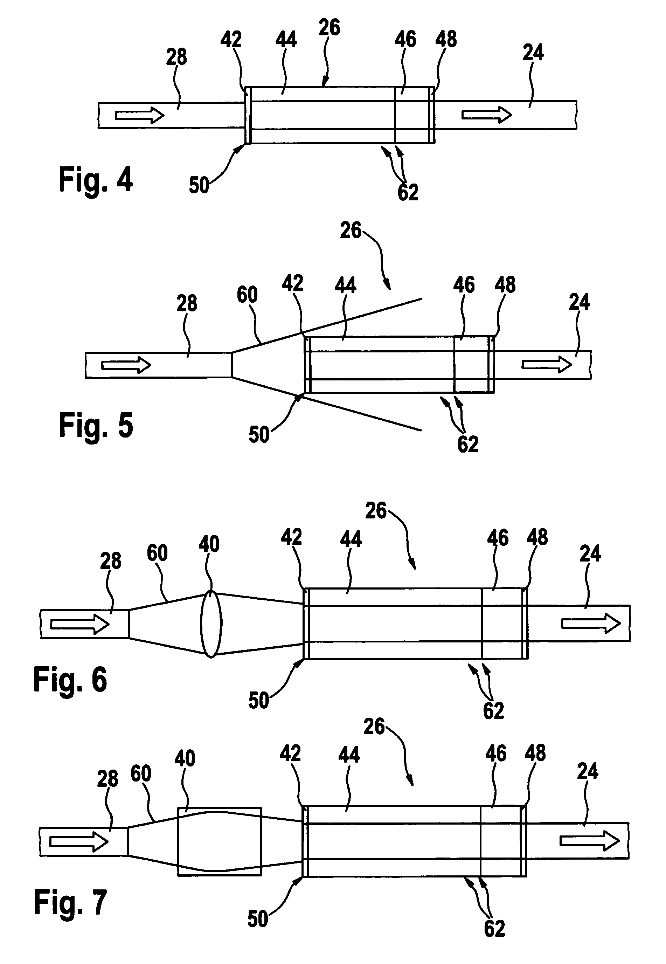

Die Lasereinrichtung 26 umfasst ein Gehäuse 38, in dem, in Richtung des Pumplichts gesehen, zunächst eine Linse 40, dann ein Einkoppelspiegel 42, weiter ein laseraktiver Festkörper 44, ein passiver Q-Switch 46 und ein Auskoppelspiegel 48 angeordnet sind (vergleiche auch Figuren 4 - 7). Die Elemente 42 - 48 sind als insgesamt monolithisches Teil 50 ausgebildet. In Figur 2 links vom Auskoppelspiegel 48 ist eine Fokussierungsoptik 52 vorhanden, die, wie aus Figur 3 hervorgeht, ein monolithisches Teil mit einer konkaven Eintrittsfläche 54 zur Strahlaufweitung (Zerstreuungslinse) sowie einer konvexen Austrittsfläche 56 zur Fokussierung (Sammellinse) ausgebildet ist. Die Fokussierungsoptik 52 ist vorzugsweise asphärisch ausgeführt. Ferner ist ein Brennraumfenster 58 vorgesehen, welches jedoch vorteilhafterweise einstückig mit der Fokussierungsoptik 52 ausgebildet ist.

Nun werden anhand der Figuren 4 - 7 verschiedene grundsätzliche Ausgestaltungen der Lasereinrichtung 26 erläutert. Aus Gründen der Einfachheit wird für solche Elemente und Bereiche, welche äquivalente Funktionen zu Elementen und Bereichen von vorher beschriebenen Ausführungsformen aufweisen, die gleichen Bezugszeichen verwendet. Dabei entspricht das in Figur 4 gezeigte Ausführungsbeispiel in etwa der in Figur 2 in verkleinertem Maßstab dargestellten Anordnung. Die in Figur 5 gezeigte Anordnung ist ganz ähnlich, allerdings tritt das Pumplicht 60 aus der Lichtleitereinrichtung 28 leicht divergent aus und trifft so auf den Einkoppelspiegel 42. Bei der Anordnung gemäß Figur 6 wird das Pumplicht durch eine Sammellinse 60, bei der Ausführungsform von Figur 7 durch eine Gradientenindexlinse 40 auf den Einkoppelspiegel 42 am laseraktiven Festkörper 44 konzentriert. Hierdurch kann eine optimale Strahldichte des Pumplichts 60 eingestellt werden, und es geht weniger Pumplicht 60 verloren. Darüber hinaus können die optisch kritischen Randbereiche des laseraktiven Festkörpers 44 ausgespart werden.

Die grundsätzliche Funktionsweise der Lasereinrichtung 26 ist folgende: Pumplicht 60 verlässt die Lichtleitereinrichtung 28 und dringt durch den Einkoppelspiegel 42, welcher für die Wellenlänge des Pumplichts 60 durchsichtig ist, in den stabförmigen laseraktiven Festkörper 44 ein. Dort wird das Pumplicht 60 absorbiert, was zur Besetzungsinversion führt. Durch die hohen Verluste des passiven Q-switch 46 wird Laseroszillation vermieden. Mit steigender Pumpdauer steigt die Strahldichte im Inneren des Resonators 62. Ab einer gewissen Strahldichte bleicht der passive Q-Switch 46 aus, die Verstärkung überschreitet die Gesamtverluste im Resonator 62, und der Laser beginnt zu oszillieren.

Auf diese Weise entsteht ein "Riesenpuls" 24, also ein Puls mit sehr hoher Spitzenleistung. Diese beträgt typischerweise einige Megawatt für eine Zeitdauer von wenigen Nanosekunden. Voraussetzung hierfür ist, dass der Einkoppelspiegel 42 für die Wellenlänge des Laserlichts 24 hoch reflektierend, der Auskoppelspiegel 48 für die Wellenlänge des Laserlichts 24 jedoch teilweise reflektierend ist, sowie der passive Q-Switch 46 eine gewisse Anfangstransmission besitzt.

Die in den Figuren 4 - 7 gezeigten Lasereinrichtungen 26 bauen sehr einfach und sind daher besonders preiswert. Die Verbindung zwischen dem laseraktiven Festkörper 44 und dem Q-Switch 46 erfolgt vorzugsweise durch Ansprengen oder thermisches Bonden. Der Einkoppelspiegel 42 und der Auskoppelspiegel 48 wiederum sind durch eine Beschichtung der axialen Endflächen des laseraktiven Festkörpers 44 beziehungsweise des Q-Switches 46 hergestellt.

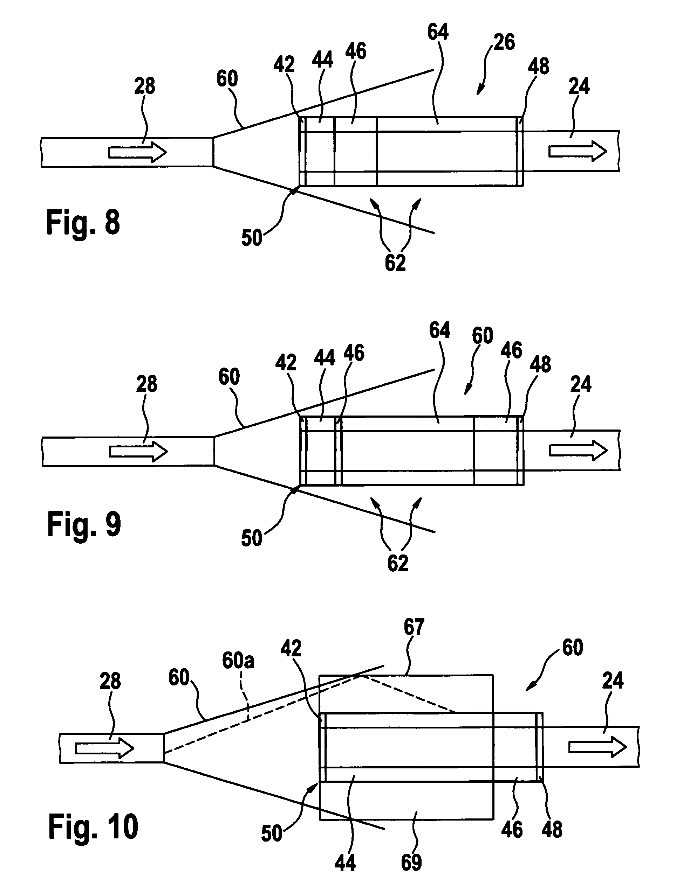

Ein anderes Grundprinzip ist in den Figuren 8 und 9 gezeigt: Dort wird der Resonator 62 der Lasereinrichtung 26 durch eine Kombination aus dem laseraktiven Festkörper 44 und einem Glaskörper 64 gebildet. Dies gestattet es, die Länge des laseraktiven Festkörpers 44 vergleichsweise klein zu halten, was die Herstellkosten reduziert. Ein weiterer wesentlicher Vorteil besteht darin, dass durch einen längeren Resonator die Strahlqualität der Lasereinrichtung verbessert werden kann. Außerdem lässt sich mit dem Brechungsindex des speziellen Glases und der Länge des Glaskörpers die Pulsdauer des Riesenimpulses steuern. Voraussetzung hierfür ist jedoch, dass das Pumplicht trotz der geringen Länge des laseraktiven Festkörpers 44 in diesem vollständig absorbiert wird. Bei der in Figur 8 gezeigten Lasereinrichtung 26 ist der Q-Switch 46 zwischen dem laseraktiven Festkörper 44 und dem Glaskörper 64 angeordnet, und der Auskoppelspiegel 48 ist auf die freie axiale Endfläche des Glaskörpers 64 aufgebracht. Bei der in Figur 9 gezeigten Lasereinrichtung 26 ist dagegen der Glaskörper 64 zwischen dem Q-Switch und dem laseraktiven Festkörper 44 angeordnet, und der Auskoppelspiegel 48 ist, wie bei den Ausführungsbeispielen der Figuren 4 - 7, auf die axiale Endfläche des Q-Switches 46 aufgebracht. Dabei ist zusätzlich zwischen dem laseraktiven Festkörper 44 und dem Glaskörper 64 eine für das Pumplicht 60 hoch reflektierende, für das Laserlicht 24 jedoch transparente Schicht 66 vorhanden, so dass das über die axiale Länge des laseraktiven Festkörpers 44 noch nicht absorbierte Pumplicht 60 in diesen zurückreflektiert wird.

Bei der Ausführung gemäß Figur 10 wird auf eine Linse verzichtet. Stattdessen wird das am laseraktiven Festkörper 44 vorbeigestrahlte Pumplicht auf Reflektionseinrichtung gestrahlt, die als ein diesen in der Art einer Hülse umgebender Glaskörper 69 ausgebildet ist. An dessen radial außen liegender Reflexionsfläche 67, welche gegebenenfalls mit einer Spiegelschicht versehen ist, wird das Pumplicht 60, wie beispielsweise durch den Strahl 60a dargestellt ist, durch Reflektion wieder zum laseraktiven Festkörper 44 hin reflektiert und in diesen transversal eingekoppelt. Die Spiegelschicht kann vor allem dann entfallen, wenn der Glaskörper 69 nach radial außen keinen optischen Kontakt zu einem anderen Medium hat. Andernfalls kann die Spiegelschicht 67 auch einfach durch eine Klebmaterial realisiert werden, mit dem der Glaskörper 69 in einen anderen Körper eingeklebt wird. Dabei versteht sich, dass der Glaskörper 69 beziehungsweise die Reflexionsfläche 67 nicht nur eine zylindrische, sondern auch eine sich konisch verjüngende oder eine gekrümmte Außenkontur aufweisen kann.

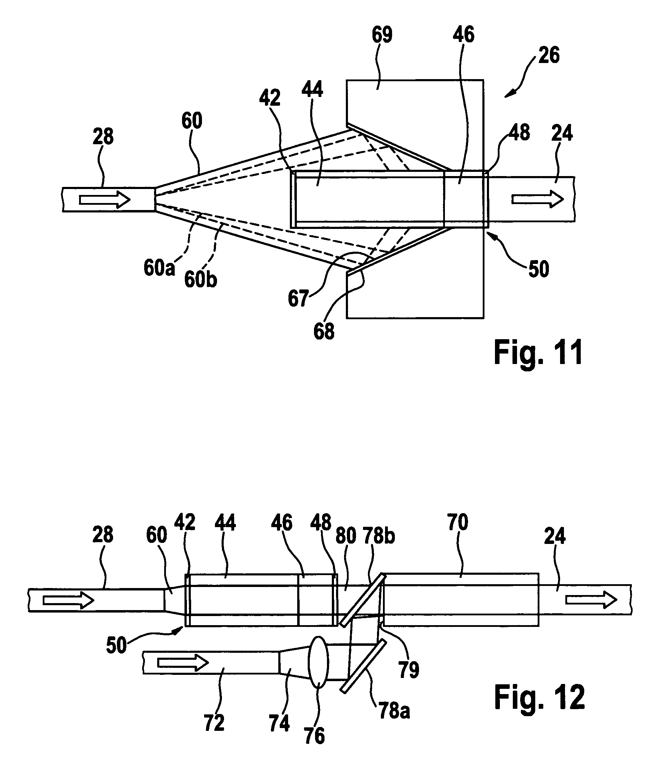

Auch bei der in Figur 11 gezeigten Ausführungsform ist radial außerhalb des laseraktiven Festkörpers 44 eine Reflektionseinrichtung in Form eines Glaskörpers 69 angeordnet. Dessen radial innere Begrenzungsfläche liegt jedoch nur in einem Bereich am Q-Switch 46 an, wohingegen sie im Bereich der radial außerhalb des laseraktiven Festkörpers 44 als Reflexionsfläche 67 konisch ausgebildet und mit einer Spiegelschicht 68 versehen ist. Auch an dieser wird Pumplicht 60 (beispielsweise Strahlen 60a und 60b), welches nicht longitudinal in den laseraktiven Festkörper 44 durch den Einkoppelspiegel 42 eingekoppelt werden kann, reflektiert und transversal in den laseraktiven Festkörper 44 eingekoppelt. die extrahierbare Energie einer solchen Vorrichtung ist besonders hoch, da ein großes Volumen des laseraktiven Festkörpers 44 gepumpt werden kann. Alternativ könnte anstelle des Glaskörpers 69 auch ein Metallkörper verwendet werden, der mit einer spiegelnden, beispielsweise polierten Reflektionsfläche versehen ist. Vorstellbar ist auch, den Zwischenraum zwischen Lichtleitereinrichtung 28 und Lasereinrichtung 26 mit einer transparenten Vergussmasse zu füllen.

Bei den in den Figuren 8 - 11 gezeigten Vorrichtungen ist der Glaskörper 64 bzw. 69 mit der Lasereinrichtung 26 fest verbunden und insoweit Bestandteil des monolithischen Teils 50.

In den Figuren 12 - 21 sind nochmals andere Varianten einer Lasereinrichtung 26 dargestellt: Bei dieser ist optisch in Serie zu der Lasereinrichtung 28 ein optischer Verstärker 70 vorhanden.

In Figur 12 ist der optische Verstärker 70, der im Wesentlichen durch einen laseraktiven Festkörper gebildet wird, koaxial zum laseraktiven Festkörper 44 der Lasereinrichtung 26 angeordnet. Der optische Verstärker 70 verfügt dabei über eine eigene Pumplichtquelle (nicht dargestellt), die das Pumplicht 74 über eine eigene Lichtleitereinrichtung 72 dem optischen Verstärker 70 zuführt. Dabei wird das Pumplicht 74 longitudinal in den optischen Verstärker 70 eingekoppelt, indem dieses durch eine Linse 76 und zwei Umlenkspiegel 78a und 78b auf die dem Q-Switch 46 zugewandte Stirnseite 79 des optischen Verstärkers 70 gestrahlt wird. Der zwischen laseraktivem Festkörper 44 der Lasereinrichtung 26 und dem optischen Verstärker 70 angeordnete Spiegel 78b ist hoch reflektierend für die Wellenlänge des Pumplichts 74 für den Verstärker 70, jedoch transparent für das von der Lasereinrichtung 26 zum Verstärker 70 gestrahlte Laserlicht 80.

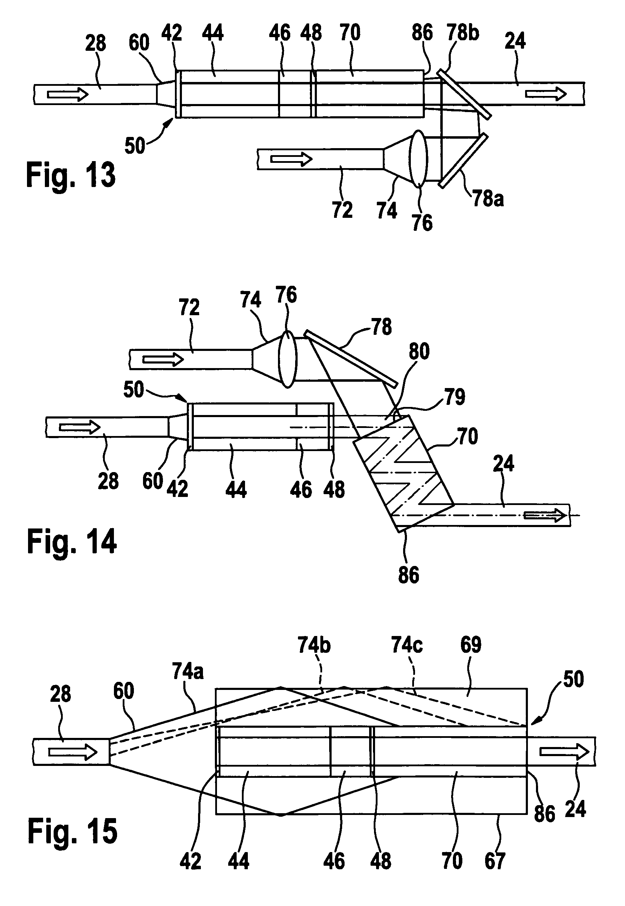

Die in Figur 13 dargestellte Ausführungsform arbeitet ähnlich, wobei Lasereinrichtung 26 und optischer Verstärker 70 in diesem Fall monolithisch sind. Um dies zu erreichen, wird das Pumplicht 74 aus der Lichtleitereinrichtung 72 in den optischen Verstärker 70 von der "Rückseite her" eingepumpt, also auf jener Stirnseite, aus der der verstärkte Laserstrahl 24 austritt. Dies bedeutet, dass der Spiegel 78b für das Pumplicht 74 hoch reflektierend, für den Laserimpuls 24 jedoch transparent ist.

Eine nochmals andere Ausführungsform zeigt Figur 14: Bei dieser wird ein Mehrfachdurchgang des Laserlichts 80 durch den optischen Verstärker 70 realisiert. Vorteilhafterweise wird die Dotierung des optischen Verstärkers 70 so gewählt, dass die Energie des Pumplichts 74 erst am Ende des optischen Verstärkers 70 vollständig absorbiert ist. Erreicht wird der Mehrfachdurchgang des Laserlichts 80 im optischen Verstärker 70 dadurch, dass der Laserstrahl 80 nicht senkrecht auf die axiale Endfläche 79 des optischen Verstärkers 70 auftrifft, sondern schräg. Hierzu ist die Längsachse des optischen Verstärkers 70 gegenüber jener des laseraktiven Festkörpers 44 verkippt. Ein weiterer Vorteil dieser Anordnung besteht darin, dass zur Einkopplung des Pumplichts 74 in den optischen Verstärker 70 nur ein einziger Umlenkspiegel 78, gegebenenfalls auch überhaupt kein Umlenkspiegel erforderlich ist.

In den Figuren 15 - 21 sind Ausführungsformen gezeigt, bei denen ein optischer Verstärker 70 vorhanden ist, auf eine zusätzlich Lichtleitereinrichtung jedoch verzichtet werden kann. Die in Figur 15 gezeigte Anordnung ist ähnlich zu jener von Figur 10. Allerdings ist in Richtung der optischen Achse gesehen unmittelbar hinter dem Q-Switch 46 mit dem Auskoppelspiegel 48 der optische Verstärker 70 angeordnet. Eine hülsenartige Reflektionseinrichtung in Form eines Glaskörpers 69 wiederum erstreckt sich radial außen vom laseraktiven Festkörper 44, vom Q-Switch 46 und auch vom optischen Verstärker 70.

Der Durchmesser des hülsenartigen Glaskörpers 69 ist so gewählt, dass Pumplicht 74a, 74b und 74c, welches aus der Lichtleitereinrichtung 28 austritt und am Einkoppelspiegel 42 des laseraktiven Festkörpers 44 der Lasereinrichtung 26 vorbeigestrahlt wird, an der radial äußeren Reflexionsfläche 67 des hülsenartigen Glaskörpers 69, die gegebenenfalls mit einer Spiegelschicht versehen ist, reflektiert und transversal in den optischen Verstärker 70 eingekoppelt wird.

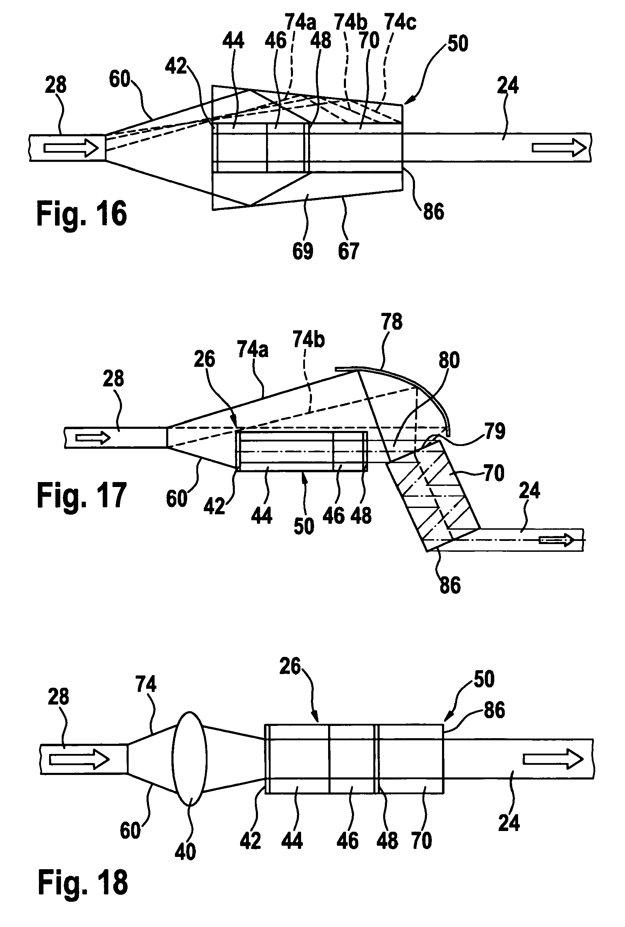

Dabei können die Lasereinrichtung 26, der optische Verstärker 70 und der Glaskörper 69 insgesamt als monolithisches Teil ausgebildet sein. Die in Figur 16 gezeigte Vorrichtung ist ähnlich aufgebaut, baut jedoch insgesamt kürzer, da die radial außen liegende Umfangsfläche des Glaskörpers 69 sich, in Strahlrichtung gesehen, konisch verjüngt.

Die in Figur 17 gezeigte Vorrichtung wiederum ist ähnlich zu jener von Figur 14 aufgebaut. Allerdings ist die Lasereinrichtung 26 gegenüber der Achse der Lichtleitereinrichtung 28 etwas versetzt angeordnet. Ferner ist der Spiegel 78 als Sammelspiegel ausgebildet, welcher die aus der Lichtleitereinrichtung 28 divergent austretenden Pumplichtstrahlen 74 auf die axiale Eintrittsfläche 79 des optischen Verstärkers 70 konzentriert.

Eine äußerst einfache Anordnung zeigt Figur 18: Bei dieser schließt der optische Verstärker 70 unmittelbar an den Q-Switch 46 beziehungsweise den auf diesem vorhandenen Auskoppelspiegel 48 an, und er wird von Pumplicht (ohne Bezugszeichen) gespeist, welches von der Lichtleitereinrichtung 28 durch den laseraktiven Festkörper 44 hindurchtritt, von diesem also nicht vollständig absorbiert wird. Dies bedeutet, dass der Q-Switch 46 für die Wellenlänge des Pumplichts für den optischen Verstärker 70 durchsichtig ist, und auch der Auskoppelspiegel 48 muss für die Wellenlänge des Pumplichts für den optischen Verstärker 70 transparent sein. Außerdem sollte der Pumplichtstrahl für den optischen Verstärker 70 eine geringe Divergenz aufweisen. Auch hier ist der Verstärker 70 Teil des Monolithen 50.

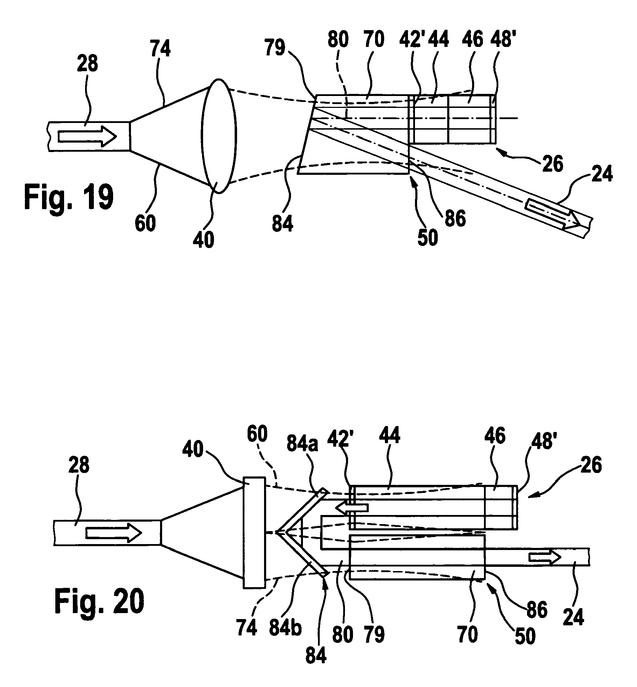

Bei der in Figur 19 gezeigten Vorrichtung wiederum gelangt das Pumplicht 74 für den Verstärker 70 aus der Lichtleitereinrichtung 28 direkt zum optischen Verstärker 70. Das Pumplicht 60 für den laseraktiven Festkörper 44 der Lasereinrichtung 26 tritt durch den optischen Verstärker 70 hindurch und gelangt erst dann zum laseraktiven Festkörper 44. Die Spiegel 42' und 48' sind entsprechend ausgeführt. Die der Lichtleitereinrichtung 28 zugewandte axiale Endfläche 79 des optischen Verstärkers 70 ist schräg ausgeführt und mit einer für das Pumplicht 60, 74 transparenten, für die Wellenlänge des Laserstrahls 24 jedoch reflektierenden Spiegelschicht 84 versehen. Auf diese Weise wird der vom laseraktiven Festkörper 44 in den optischen Verstärker 70 eingestrahlte Laserstrahl 80 schräg reflektiert und tritt als Laserstrahl 24 schräg aus dem optischen Verstärker 70 aus.

Einen noch höheren Wirkungsgrad hat die Anordnung gemäß Figur 20. Bei dieser wird das aus der Lichtleitereinrichtung 28 austretende Pumplicht 60 von einer bifokalen Fresnellinse 40 gesammelt und in Form zweier diskreter Strahlen durch eine Spiegelanordnung 84 hindurch auf den laseraktiven Festkörper 44 und den räumlich neben diesem angeordneten optischen Verstärker 70 gestrahlt. Dabei sind der laseraktive Festkörper 44 der Lasereinrichtung 26 und der laseraktive Festkörper des optischen Verstärkers 70 einstückig als monolithisches Teil 50 ausgebildet. Die Spiegelanordnung 84 umfasst zwei zueinander in einem rechten Winkel stehende Spiegelflächen 84a und 84b, die für das aus der Lichtleitereinrichtung 28 austretende Pumplicht 60 durchlässig, für das aus dem laseraktiven Festkörper 44 der Lasereinrichtung 26 austretende Laserlicht 80 jedoch reflektierend sind. Auf diese Weise wird der rückwärts aus der Lasereinrichtung 26 austretende Laserstrahl 80 zur Seite und zurück zum optischen Verstärker 70 umgelenkt.

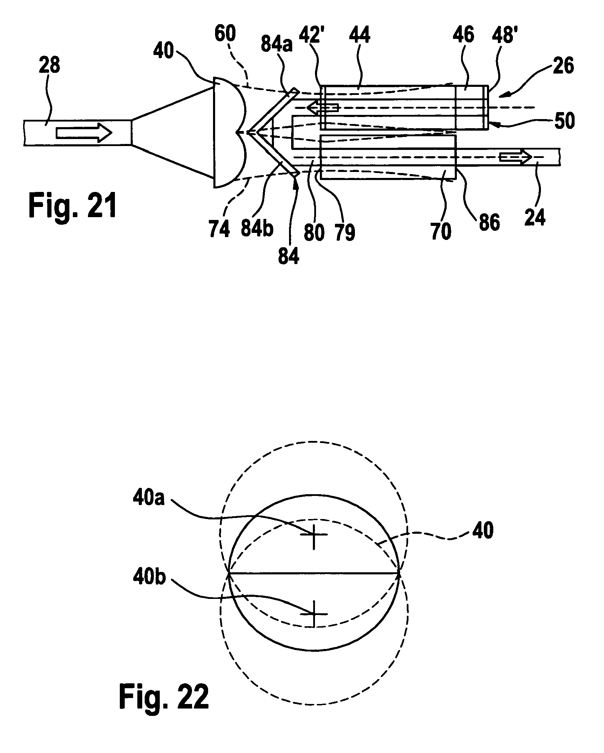

Ähnlich arbeitet die in Figur 21 dargestellte Anordnung, wobei hier der laseraktive Festkörper 44 der Lasereinrichtung 26 und der optische Verstärker 70 als getrennte Bauteile ausgeführt sind, und wobei das Pumplicht 60, 74 durch eine nicht rotationssymmetrische bifokale Sammellinse 40 entsprechend Figur 22 mit zwei Linsenzentren 40a und 40b erzeugt wird. Die in Figur 21 dargestellte Vorrichtung hat, ebenso wie jene der Figur 20, den Vorteil, dass nur eine Lichtleitereinrichtung 28 erforderlich ist, dass Lasereinrichtung 26 und optischer Verstärker 70 longitudinal gepumpt werden mit entsprechend hohem Wirkungsgrad, dass der Laserstrahl 24 axial austritt, und dass die Gesamtabmessungen relativ klein sind.

Es versteht sich, dass die in den Figuren 12 - 21 gezeigten Vorrichtungen, bei denen eine Lasereinrichtung 26 mit einem optischen Verstärker 70 gekoppelt ist, mit den in den Figuren 8 - 11 gezeigten Ausführungsformen, bei denen zusätzlich ein Glaskörper 64 vorhanden ist, kombiniert werden können. Ferner kann, auch wenn nicht dargestellt, eine Auskoppelfläche des optischen Verstärkers 70 (beispielsweise Fläche 86 in Figur 20) mit einer Teilverspiegelung versehen werden, wodurch ein "gekoppelter Resonator" entsteht. Auf diese Weise wird ein teilweiser Mehrfachdurchgang durch den optischen Verstärker 70 erreicht.

## Patentansprüche

1. Zündeinrichtung (27) für eine Brennkraftmaschine (10), insbesondere eines Kraftfahrzeugs, mit mindestens einer Pumplichtquelle (30), welche ein Pumplicht (60) bereitstellt, mit einer Lasereinrichtung (26), die einen Laserimpuls (24) erzeugt zur Abstrahlung in einen Brennraum (14), und mit einer Lichtleitereinrichtung (28), welche das Pumplicht (60) von der Pumplichtquelle (30) zur Lasereinrichtung (26) überträgt, **dadurch gekennzeichnet, dass** ein laseraktiver Festkörper (44) und ein passiver Q-Switch (46), vorzugsweise auch ein Einkoppelspiegel (42) und ein Auskoppelspiegel (4-8) der Lasereinrichtung (26) als insgesamt monolithisches Teil (50) ausgebildet sind wobei der laseraktive Festkörper (44) und der passive Q-Switch (46) miteinander durch Ansprengen, durch thermisches Bonden oder durch einen Sinterprozess verbunden sind.

2. Zündeinrichtung nach einem der Ansprüche 1, **dadurch gekennzeichnet, dass** der Einkoppelspiegel (42) und/oder der Auskoppelspiegel (48) durch eine dielektrische Beschichtung hergestellt sind.

3. Zündeinrichtung nach einem der vorhergehenden Ansprüche, **dadurch gekennzeichnet, dass** das monolithische Teil (50) aus einem Wafer hergestellt ist.

4. Zündeinrichtung nach einem der vorhergehenden Ansprüche, **dadurch gekennzeichnet, dass** ein Resonator (62) der Lasereinrichtung (26) durch den laseraktiven Festkörper (44) und mindestens einen Glaskörper (64) gebildet wird.

5. Zündeinrichtung nach Anspruch 4, **dadurch gekennzeichnet, dass** der Glaskörper (64) seriell zu dem laseraktiven Festkörper (44) angeordnet und länger als dieser ist.

6. Zündeinrichtung nach einem der Ansprüche 4 oder 5, **dadurch gekennzeichnet, dass** der Glaskörper (64) und der laseraktive Festkörper (44) monolithisch sind.

7. Zündeinrichtung nach einem der Ansprüche 4 bis 6, **dadurch gekennzeichnet, dass** der Glaskörper (64) zwischen passivem Q-Switch (46) und laseraktivem Festkörper (44) angeordnet ist, und dass zwischen laseraktivem Festkörper (44) und Glaskörper (64) eine für das Pumplicht (60) hochreflektierende und für das Laserlicht (24) transparente Schicht (66) angeordnet ist.

8. Zündeinrichtung nach einem der vorhergehenden Ansprüche, **dadurch gekennzeichnet, dass** eine Reflektionseinrichtung (69), insbesondere ein Glaskörper, zu dem laseraktiven Festkörper (44) parallel angeordnet ist, insbesondere diesen radial außen umgibt, und dass die Reflektionseinrichtung (69) eine Reflektionsfläche (67) aufweist, von der Pumplicht (60) transversal in den laseraktiven Festkörper (44) reflektiert wird.

9. Zündeinrichtung nach Anspruch 8, **dadurch gekennzeichnet, dass** die Reflektionsfläche (67) schräg bzw. konisch ist.

10. Zündeinrichtung nach einem der vorhergehenden Ansprüche, **dadurch gekennzeichnet, dass** sie einen optischen Verstärker (70) umfasst, in den Pumplicht (74) eingekoppelt wird und der optisch in Serie zu der Lasereinrichtung (26) angeordnet ist.

11. Zündeinrichtung nach Anspruch 10, **dadurch gekennzeichnet, dass** die Lasereinrichtung (26) von einer ersten Lichtleitereinrichtung (28) und der Verstärker (70) von einer zweiten Lichtleitereinrichtung (72) gespeist wird.

12. Zündeinrichtung nach einem der Ansprüche 10 oder 11, **dadurch gekennzeichnet, dass** die Lasereinrichtung (26) und der Verstärker (70) von der gleichen Lichtleitereinrichtung (28) gespeist werden.

13. Zündeinrichtung nach Anspruch 12, **dadurch gekennzeichnet, dass** das Pumplicht (74) durch eine bifokale Sammellinsenanordnung (40) auf die Lasereinrichtung (26) und den Verstärker (70) aufgeteilt wird.

14. Zündeinrichtung nach einem der Ansprüche 10 bis 13, **dadurch gekennzeichnet, dass** der Verstärker (70) transversal durch Reflektion an einer ihn umgebenden Reflektionseinrichtung, insbesondere einer Reflektionsfläche (67) eines Glaskörpers (69), gespeist wird.

15. Zündeinrichtung nach Anspruch 14, **dadurch gekennzeichnet, dass** sich die Reflektionseinrichtung (69) in Strahlrichtung gesehen konisch verjüngt.

16. Zündeinrichtung nach einem der Ansprüche 10 bis 15, **dadurch gekennzeichnet, dass** der Verstärker (70) longitudinal durch Reflektion an einer Reflektionseinrichtung (78) gespeist wird.

17. Zündeinrichtung nach einem der Ansprüche 10 bis 16, **dadurch gekennzeichnet, dass** der passive Q-Switch (46) und der Auskoppelspiegel (48) der Lasereinrichtung (26) für die Wellenlänge des Verstärker-Pumplichts (74) durchlässig sind, dass das Pumplicht (60) vom laseraktiven Körper (44) der Lasereinrichtung (26) nicht vollständig absorbiert wird, und dass der Verstärker (70) auf der von der Lichtleitereinrichtung (28) abgewandten Seite der Lasereinrichtung (26) angeordnet ist.

18. Zündeinrichtung nach einem der Ansprüche 10 bis 17, **dadurch gekennzeichnet, dass** der Verstärker (70) optisch zwischen der Lichtleitereinrichtung (28) und der Lasereinrichtung (26), ein Reflektor (42') optisch hinter dem passive Q-Switch (46), und der Auskoppelspiegel (48') zwischen Verstärker (70) und laseraktivem Festkörper (44) der Lasereinrichtung (26) angeordnet ist, wobei der Bereich (82) des Verstärkers (70), in den das Pumplicht (60, 74) eingekoppelt wird, schräg ausgeführt ist, und der Verstärker (70) eine seitliche Auskoppelfläche (86) umfasst.

19. Zündeinrichtung nach einem der Ansprüche 10 bis 17, **dadurch gekennzeichnet, dass** optisch hinter dem Q-Switch (46) ein Reflektor (42') und auf der vom Q-Switch (46) abgewandten Seite des laseraktiven Festkörpers (44) der Lasereinrichtung (26) der Auskoppelspiegel (48') angeordnet ist, und dass sie eine Umlenkeinrichtung (84) umfasst, welche den Laserstrahl (80) zum Verstärker (70) hin umlenkt.

20. Zündeinrichtung nach Anspruch 19, **dadurch gekennzeichnet, dass** der Verstärker (70) und der laseraktive Festkörper (44) der Lasereinrichtung (46) räumlich nebeneinander angeordnet und vorzugsweise monolithisch sind.

21. Zündeinrichtung nach einem der Ansprüche 10 bis 20, **dadurch gekennzeichnet, dass** die Auskoppelfläche (86) des Verstärkers (70) eine Teilverspiegelung aufweist.

22. Zündeinrichtung nach einem der vorhergehenden Ansprüche, **dadurch gekennzeichnet, dass** sie eine Fokussieroptik (52) für den Laserstrahl (24) umfasst, welche eine Zerstreuungslinse (54) und eine Sammellinse (56) umfasst, die an einem monolithischen Teil ausgebildet sind.

23. Zündeinrichtung nach Anspruch 22, **dadurch gekennzeichnet, dass** das monolithische Teil (52) ein Brennraumfenster (58) umfasst oder dieses bildet.

## Claims

1. Ignition device (27) for an internal combustion engine (10), in particular of a motor vehicle, having at least one pumping light source (30), which makes available a pumped light (60), having a laser device (26) which generates a laser pulse (24) for irradiation into a combustion space (14), and having a lightguide device (28) which transmits the pumped light (60) from the pumping light source (30) to the laser device (26), **characterized in that** a laser-active solid (44) and a passive Q switch (46) preferably also an injection mirror (42) and an extraction mirror (48) of the laser device (26) are embodied as an overall monolithic component (50), wherein the laser-active solid (44) and the passive Q switch (46) are connected to one another by optical contacting, by thermal bonding or else by a sintering process.

2. Ignition device according to Claim 1, **characterized in that** the injection mirror (42) and/or the extraction mirror (48) are manufactured by dielectric coating.

3. Ignition device according to one of the preceding claims, **characterized in that** the monolithic component (50) is manufactured from a wafer.

4. Ignition device according to one of the preceding claims, **characterized in that** a resonator (62) of the laser device (26) is formed by the laser-active solid (44) and at least one glass body (64).

5. Ignition device according to Claim 4, **characterized in that** the glass body (64) is arranged serially with respect to the laser-active solid (44) and is longer than it.

6. Ignition device according to one of Claims 4 or 5, **characterized in that** the glass body (64) and the laser-active solid (44) are monolithic.

7. Ignition device according to one of Claims 4 to 6, **characterized in that** the glass body (64) is arranged between the passive Q switch (46) and the laser-active solid (44), and **in that** a layer (66) which is highly reflective to the pumped light (60) and transparent to the laser light (24) is arranged between the laser-active solid (44) and the glass body (64).

8. Ignition device according to one of the preceding claims, **characterized in that** a reflection device (69), in particular a glass body, is arranged in parallel with the laser-active solid (44), in particular surrounds the latter radially on the outside, and **in that** the reflection device (69) has a reflective surface (67) by which pumped light (60) is reflected transversely into the laser-active solid (44).

9. Ignition device according to Claim 8, **characterized in that** the reflective surface (67) is oblique or conical.

10. Ignition device according to one of the preceding claims, **characterized in that** said ignition device comprises an optical amplifier (70) into which pumped light (74) is injected and which is arranged optically in series with the laser device (26).

11. Ignition device according to Claim 10, **characterized in that** the laser device (26) is fed by a first lightguide device (28), and the amplifier (70) is fed by a second lightguide device (72).

12. Ignition device according to one of Claims 10 or 11, **characterized in that** the laser device (26) and the amplifier (70) are fed by the same lightguide device (28).

13. Ignition device according to Claim 12, **characterized in that** the pumped light (74) is split between the laser device (26) and the amplifier (70) by a bifocal collecting lens arrangement (40).

14. Ignition device according to one of Claims 10 to 13, **characterized in that** the amplifier (70) is fed transversely by reflection at a reflection device surrounding it, in particular a reflective surface (67) of a glass body (69).

15. Ignition device according to Claim 14, **characterized in that** the reflection device (69) tapers conically when viewed in the beam direction.

16. Ignition device according to one of Claims 10 to 15, **characterized in that** the amplifier (70) is fed longitudinally by reflection at a reflection device (78).

17. Ignition device according to one of Claims 10 to 16, **characterized in that** the passive Q switch (46) and the extraction mirror (48) of the laser device (26) are transmissive to the wavelength of the amplifier pumped light (74), **in that** the pumped light (60) is not completely absorbed by the laser-active body (44) of the laser device (26), and **in that** the amplifier (70) is arranged on the side of the laser device (26) facing away from the lightguide device (28).

18. Ignition device according to one of Claims 10 to 17,
**characterized in that** the amplifier (70) is arranged optically between the lightguide device (28) and the laser device (26), a reflector (42') is arranged optically behind the passive Q switch (46), and the extraction mirror (48') is arranged between the amplifier (70) and the laser-active solid (44) of the laser device (26), wherein the region (82) of the amplifier (70) into which the pumped light (60, 74) is injected is of oblique design, and the amplifier (70) comprises a lateral extraction surface (86).

19. Ignition device according to one of Claims 10 to 17, **characterized in that** a reflector (42') is arranged optically behind the Q switch (46), and the extraction mirror (48') is arranged on the side of the laser-active solid (44) of the laser device (26) facing away from the Q switch (46), and **in that** said ignition device comprises a deflection device (84) which deflects the laser beam (80) to the amplifier (70).

20. Ignition device according to Claim 19, **characterized in that** the amplifier (70) and the laser-active solid (44) of the laser device (46) are arranged spatially one next to the other and are preferably monolithic.

21. Ignition device according to one of Claims 10 to 20, **characterized in that** the extraction surface (86) of the amplifier (70) has partial mirroring.

22. Ignition device according to one of the preceding claims, **characterized in that** said ignition device comprises focusing optics (52) for the laser beam (24), which focusing optics (52) comprise a scattering lens (54) and a collecting lens (56) which are formed on a monolithic component.

23. Ignition device according to Claim 22, **characterized in that** the monolithic component (52) comprises a combustion chamber window (58) or forms same.

## Revendications

1. Dispositif d'allumage (27) pour un moteur à combustion interne (10), notamment d'un véhicule automobile, équipé d'au moins une source lumineuse de pompage (30) disposant d'une lumière de pompage (60), avec un dispositif laser (26) produisant une impulsion laser (24) envoyée dans une chambre de combustion (14) et avec un dispositif conducteur de lumière (28) transmettant la lumière de pompage (60) de la source lumineuse de pompage (30) au dispositif laser (26), **caractérisé en ce qu'**un corps fixe actif du laser (44) et un contacteur Q passif (46) ainsi que de préférence également un miroir de couplage (42) et un miroir de découplage (48) du dispositif laser (26) prennent tous ensemble la forme d'une partie réalisée d'un seul bloc (50), le corps fixe actif du laser (44) et le contacteur Q passif (46) étant reliés entre eux par accolement, collage d'une bande thermique ou utilisation d'un procédé de frittage.

2. Dispositif d'allumage selon la revendication 1, **caractérisé en ce que** le miroir de couplage (42) et/ou le miroir de découplage (48) sont fabriqués par le biais d'un revêtement diélectrique.

3. Dispositif d'allumage selon l'une quelconque des revendications précédentes, **caractérisé en ce que** la partie réalisée d'un seul bloc (50) est fabriquée à partir d'une tranche.

4. Dispositif d'allumage selon l'une quelconque des revendications précédentes, **caractérisé en ce qu'**un résonateur (62) du dispositif laser (26) est formé par le corps fixe actif du laser (44) et au moins un corps de verre (64).

5. Dispositif d'allumage selon la revendication 4, **caractérisé en ce que** le corps de verre (64) est disposé en série par rapport au corps fixe actif du laser (44) et est plus long que celui-ci.

6. Dispositif d'allumage selon l'une quelconque des revendications 4 ou 5, **caractérisé en ce que** le corps de verre (64) et le corps fixe actif du laser (44) sont réalisés d'un seul bloc.

7. Dispositif d'allumage selon l'une quelconque des revendications 4 à 6, **caractérisé en ce que** le corps de verre (64) est disposé entre le contacteur Q passif (46) et le corps fixe actif du laser (44) et qu'une couche transparente (66) hautement réfléchissante pour la lumière de pompage (60) et pour la lumière laser (24) est disposée entre le corps fixe actif du laser (44) et le corps de verre (64).

8. Dispositif d'allumage selon l'une quelconque des revendications précédentes, **caractérisé en ce qu'**un dispositif réfléchissant (69), notamment un corps de verre, est disposé parallèlement au corps fixe actif du laser (44) et l'entoure notamment à l'extérieur dans le plan radial et que le dispositif réfléchissant (69) comporte une surface réfléchissante (67) par le biais de laquelle la lumière de pompage (60) est réfléchie transversalement dans le corps fixe actif du laser (44).

9. Dispositif d'allumage selon la revendication 8, **caractérisé en ce que** la surface réfléchissante (67) est inclinée et/ou conique.

10. Dispositif d'allumage selon l'une quelconque des revendications précédentes, **caractérisé en ce qu'**il comprend un amplificateur optique (70) dans lequel est couplée la lumière de pompage (74) et qui est disposé sur le plan optique en série par rapport au dispositif laser (26).

11. Dispositif d'allumage selon la revendication 10, **caractérisé en ce que** le dispositif laser (26) est alimenté par un premier dispositif conducteur de lumière (28) et que l'amplificateur (70) est alimenté par un deuxième dispositif conducteur de lumière (72).

12. Dispositif d'allumage selon l'une quelconque des revendications 10 ou 11, **caractérisé en ce que** le dispositif laser (26) et l'amplificateur (70) sont alimentés par le même dispositif conducteur de lumière (28).

13. Dispositif d'allumage selon la revendication 12, **caractérisé en ce que** la lumière de pompage (74) est séparée par un agencement de lentilles convergentes (40) bifocal disposé sur le dispositif laser (26) et l'amplificateur (70).

14. Dispositif d'allumage selon l'une quelconque des revendications 10 à 13, **caractérisé en ce que** l'amplificateur (70) est alimenté transversalement par réflexion sur un dispositif réfléchissant l'entourant, notamment une surface réfléchissante (67) d'un corps de verre (69).

15. Dispositif d'allumage selon la revendication 14, **caractérisé en ce que** le dispositif réfléchissant (69) se rétrécit de façon conique dans la direction du faisceau.

16. Dispositif d'allumage selon l'une quelconque des revendications 10 à 15, **caractérisé en ce que** l'amplificateur (70) est alimenté longitudinalement par réflexion sur un dispositif réfléchissant (78).

17. Dispositif d'allumage selon l'une quelconque des revendications 10 à 16, **caractérisé en ce que** le contacteur Q passif (46) et le miroir de découplage (48) du dispositif laser (26) sont perméables à la longueur d'onde de la lumière de pompage de l'amplificateur (74), que la lumière de pompage (60) du corps actif du laser (44) du dispositif laser (26) n'est pas entièrement absorbée et que l'amplificateur (70) est disposé sur le côté du dispositif laser (26) opposé au dispositif conducteur de lumière (28).

18. Dispositif d'allumage selon l'une quelconque des revendications 10 à 17, **caractérisé en ce que** l'amplificateur (70) est disposé sur le plan optique entre le dispositif conducteur de lumière (28) et le dispositif laser (26), qu'un réflecteur (42') est disposé sur le plan optique derrière le contacteur Q passif (46) et que le miroir de découplage (48') est disposé entre l'amplificateur (70) et le corps fixe actif du laser (44) du dispositif laser (26), la région (82) de l'amplificateur (70) dans laquelle la lumière de pompage (60, 74) est couplée étant réalisée de façon inclinée et l'amplificateur (70) comportant une surface de découplage (86) latérale.

19. Dispositif d'allumage selon l'une quelconque des revendications 10 à 17, **caractérisé en ce qu'**un réflecteur (42') est disposé sur le plan optique derrière le contacteur Q (46) et que le miroir de découplage (48') est disposé sur le côté du corps fixe actif du laser (44) du dispositif laser (26) opposé au contacteur Q (46) et qu'il comprend un dispositif de déviation (84) qui dévie le faisceau laser (80) vers l'amplificateur (70).

20. Dispositif d'allumage selon la revendication 19, **caractérisé en ce que** l'amplificateur (70) et le corps fixe actif du laser (44) du dispositif laser (46) sont disposés côte à côte dans l'espace et sont de préférence réalisés d'un seul bloc.

21. Dispositif d'allumage selon l'une quelconque des revendications 10 à 20, **caractérisé en ce que** la surface de découplage (86) de l'amplificateur (70) présente un réfléchissement partiel.

22. Dispositif d'allumage selon l'une quelconque des revendications précédentes, **caractérisé en ce qu'**il comprend un élément optique de focalisation (52) pour le faisceau laser (24) comprenant une lentille divergente (54) et une lentille convergente (56) réalisées au niveau d'une partie réalisée d'un seul bloc.

23. Dispositif d'allumage selon la revendication 22, **caractérisé en ce que** la partie réalisée d'un seul bloc (52) comprend une fenêtre de chambre de combustion (58) ou la forme.
